(19) Europäisches Patentamt

European Patent Office

Office européen des brevets

(11) EP 0 660 277 B1

(12) **EUROPEAN PATENT SPECIFICATION**

(45) Date of publication and mention
of the grant of the patent:
**20.01.1999 Bulletin 1999/03**

(51) Int Cl.<sup>6</sup>: **G07D 7/00**

(21) Application number: **94500188.1**

(22) Date of filing: **21.11.1994**

(54) **Method and apparatus for the characterization and discrimination of legal tender bank notes and documents**

Verfahren und Vorrichtung zur Kennzeichnung und Unterscheidung von legalen Banknoten und Dokumenten

Méthode et dispositif pour la caractérisation et la différenciation de billets de banque et documents légaux

(84) Designated Contracting States:
**AT BE CH DE DK FR GB GR IE IT LI LU MC NL PT SE**
Designated Extension States:
**SI**

(30) Priority: **27.12.1993 ES 9302692**

(43) Date of publication of application:
**28.06.1995 Bulletin 1995/26**

(73) Proprietor: **AZKOYEN INDUSTRIAL, S.A.**
**E-31350 Peralta (Navarra) (ES)**

(72) Inventors:
• **Echapare Ibarrola, Jesus**
**ES-31007 Pamplona, Navarra (ES)**

• **Ormazabal Aramburu, Angel**
**E-20500 Mondragon, Guipuzcoa (ES)**

(74) Representative: **Davila Baz, Angel et al**
**c/o Clarke, Modet & Co.,**
**Avda. de los Encuartes 21**
**28760 Tres Cantos (Madrid) (ES)**

(56) References cited:
EP-A- 0 072 237    EP-A- 0 314 999
EP-A- 0 395 833    EP-A- 0 537 513
EP-A- 0 558 340    WO-A-91/03031
GB-A- 2 088 051

## Description

This invention refers to a method for the characterization and discrimination of legal tender bank notes and documents, by means of which virtually total reliability can be obtained in the acceptance or rejection of the document analysed. The invention equally refers to the apparatus by means of which the said method can be carried out.

Traditionally, for the optical validation of bank notes the tone of the inks used has been measured, both in the visible spectrum and outside it, by means of broad-spectrum photosensors, typically photodiodes or phototransistors which, using techniques of illumination in different wavelengths, obtain incomplete colour information.

For the validation of bank notes, methods are known that consist of carrying the bank note or document to be analysed along a path in which that document is illuminated and the analysis conducted by means of sensors for their colour, with signals being produced that are conditioned and subjected to analog-digital processing.

For measuring the colour, these familiar systems are based on the use of broad-spectrum photosensors which do not in themselves give information on the colour. In order to obtain this information the document is sequentially illuminated with different wavelengths, typically infrared, red and yellow, and more recently green. In a broad-spectrum photosensor the set of information read by the sensor in the photosensor with each of the above illuminations represents the colour of the document under analysis.

Among familiar methods used for analysing the colour, an initial division can be made according to whether the light transmitted or reflected by the bank note (depending on the relative location of the light source) is diffracted by means of diffraction filters or prisms, with the analysis of the spectral components of the diffraction being proceeded with, or whether the light is processed by means of applying monochromatic filters (either to the illuminating light or to the light coming from the bank note), in which case the chromatic components defined by the filters used are analysed.

Within the systems based on monochromatic filters, the methods used can be classified into two major groups:

1) Capturing of the light signal by means of broad-spectrum photosensorization with illumination of the bank note by means of monochromatic light sources (of narrow spectrum, typically the colours green, red or infrared) which are activated sequentially.

For capturing the light signal either unitary photosensors are used (as an illustrative example of these procedures, patents US 3679314, GB 1470737 and US 4618257 can be quoted) or groupings of unitary photosensors forming linear rows of photodetectors are used (for example those described by patents EP 78708, GB 2088051 and EP 537513).

2) Capturing of the light signal by means of narrow-spectrum photosensors (achieved by means of optical filters), each of them sensitive to a specific colour (for example red, green and blue), and illumination of the bank note by means of broad-spectrum emission light (typically white light). In this case as well the light signal can be captured by means of unitary groupings of narrow-spectrum photosensors, typically two or three photosensors (patents EP 395833, GB 2064101, GB 2192275 and US 3491243 serve as illustrative references) or by means of sets of such groupings forming linear rows of narrow-spectrum photodetectors (US patent 4922109 serves by way of reference).

European Patent Office publication no. A-0558340 shows a processing apparatus for performing accurate discrimination between specific originals and ordinary originals. A CCD color sensor inputs RGB signals, and a color-space matching judgement circuit and pattern matching judgement circuit judge the similarity in the color distribution and pattern between the input RGB data and a predetermined specific image data. A CPU judges the similarity and a print-signal generator generates a change signal in accordance with the judged similarity. The input RGB signals are changed based on the generated change signal and outputted to an external color printer.

WIPO publication no. WO-A-91/03031 shows a method and a means for checking genuineness of paper money based upon detection of the characteristic differences in the printing process of genuine bank notes and counterfeit bills produced with a colour copying machine. The detection is conducted in narrow wavelength band respectively in typical red and blue colour ranges, and simultaneously in particular directions, with reflected and scattered light. Detection of intensity in a correspondingly narrow band near the maximum sensitivity range of the eye, i.e., in the green range, and in another direction, is also conducted for reference purposes. Preferably the measurement is made in a particularly selected point where the contents of blue and red in the print of the genuine bank note are at an extremum, i.e., high or low.

European Patent publication no. EP-A-0072237 shows an apparatus for scanning bank notes. A lengthwise strip of the banknote is illuminated with white light, and the banknote is moved parallel to its width. Light reflected from all regions of the lengthwise strip is conveyed through an optical fibre fishtail array to a single photodetector, or to a spectroscope and thence to several photodetectors for colour scanning. The waveform produced by the or each photodetector is then characteristic of the surface of the banknote, and is used in an analysing circuit for banknote pattern recognition, or to sense the condition of the banknote with regard to its age or degree of soiling. The analysing circuit includes means for compressing or expanding the length of the waveform to give it a standard length for subsequent comparison with one or more stored characteristic waveforms in a memory. The apparatus likewise determines the mean level of intensity of the waveform in an integrator, and includes a circuit for obtaining the standard deviation of selected points of the waveform from the mean value, a low standard deviation indicating a badly soiled or worn banknote.

Some observations can be made regarding the methods of capturing the light signal described above.

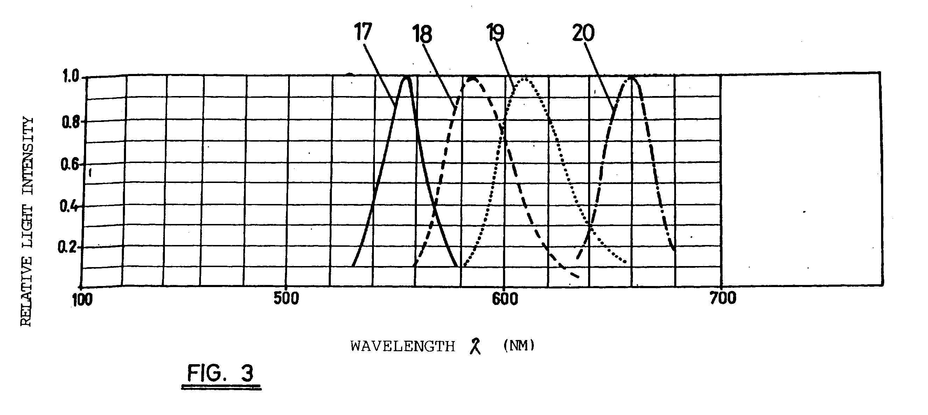

Capturing by means of narrow-spectrum photosensors and broad-band illumination offers a more complete chromatic response than does capturing with broad-spectrum photosensors sequentially illuminated with narrow-spectrum light, since when the bank notes are illuminated with two, three or even four different narrow spectra (no more are used because of the considerable increase in complexity and cost), inter-spectral spaces corresponding to their respective colours are always left, and for these spaces the sensitivity to capturing of luminosity is notably attenuated. Furthermore, using LED photodiodes as a narrow-spectrum illuminator device (which are used in the majority of cases, mainly because of their good switching time with respect to other light sources for working sequentially), there is a notable lack of blue light tones due to the current non-existence of high-efficiency blue LEDs compared with the efficiency achieved with other colours having possible commercial use (red, orange, yellow and green), which leads to a poor sensitivity below a wavelength of 500 nm in the chromatic spectrum (as can be seen in figure 3).

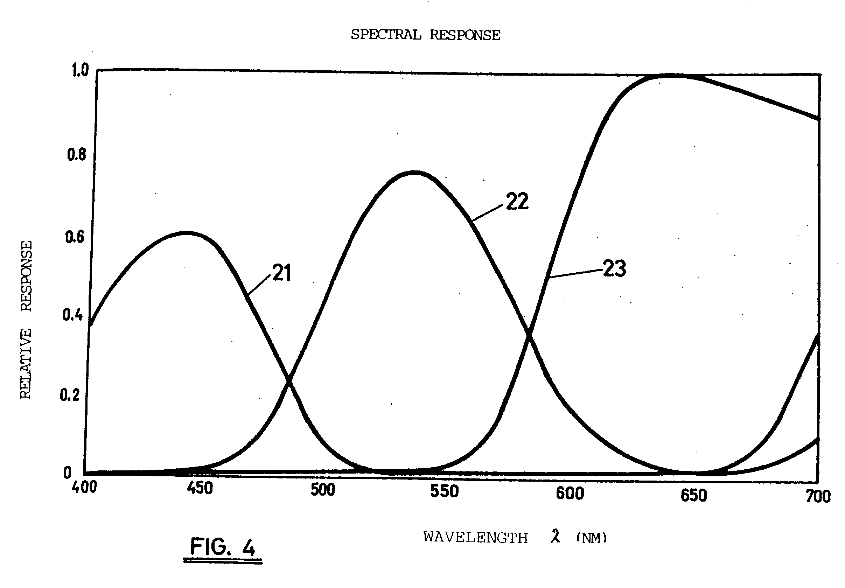

By using instead broad-band illumination (white light) with photosensors sensitive to the primary colours red, green and blue, the whole chromatic spectrum can be covered, with the sensitivity of the photosensor device being maintained throughout the entire width of the spectrum (see figure 4).

This latter procedure is more similar to the means by which colour perception takes place in the human eye, based on the existence in the retina of three different types of cone approximately sensitive to red, green and blue respectively.

According to this, the procedures for capturing the light signal falling in the second group in the classification made do not suffer from blind zones within the chromatic spectrum - the primary defect that can be attributed to the methods of the first group.

Moreover, in photosensors working by decomposition into primary colours (group 2) there is a simultaneity in time of the components of the colour obtained in each zone analysed, which does not occur with the chromatic information obtained in sequential illumination systems (group 1).

According to this, a red, green and blue photosensor can receive light coming from the bank note both by transmission and by reflection simultaneously, provided that they are of different spectra (for example blue by reflection and red by transmission), with processing of both signals being carried out simultaneously, something that is not possible to do with a broad-spectrum photosensor.

Within the procedures for capturing of light signals by obtaining the primary components (red, green and blue), systems based on rows of photodetectors extract much more information from the surface of the bank note since in these systems, and for each of the fundamental colours, information is obtained from the surface of the bank note discretized into a two-dimensional matrix:

$$[R]_{ij} \quad : \quad [G]_{ij} \quad : \quad [B]_{ij}$$
$$i = 1,2,\ldots m \quad : \quad j = 1,2,\ldots n$$

If the row contains 32 sets of red, green and blue photosensors and 150 lines are analysed along the bank note, the matrices would be 150 rows by 32 columns (m = 150, n = 32).

On the other hand, discretized information matrices obtained in systems based on single sets of red, green and blue photosensors are of a single dimension with which if 150 zones of the bank note are analysed, as in the above example, matrices of 150 rows by a single column are obtained.

Clearly the information stored in matrices of systems made up of rows of red, green and blue photosensor sets is much greater than that stored in those corresponding to unitary sets in such a way that, although both systems can theoretically achieve a similar resolution in the longitudinal dimension of the bank note, the same cannot be said for the resolution in the detail analysis along the transverse dimension of the bank note, since the resolution possessed by systems with rows of photosensors is unattainable by systems with unitary sets.

The object of the present invention is to develop a discriminating method for bank notes based on a system of analysing the colour with greater precision than that of those known to date. The invention equally develops the apparatus for carrying out the said procedure.

The method, according to the invention, for the characterization and discrimination of legal tender bank notes and documents, consisting of the carriage of the document to be analysed along a path in which that document is illuminated and its colour analysed by means of at least one red-green-blue colour sensor, which provides information on the colour components of the light received from the document subjected to examination, with the aim of extracting the colorimetric characteristics of the document, from which are obtained statistical parameters to be compared with representative standards for valid documents with the aim of deciding on the acceptance or rejection of the document subjected to examination, characterized in that, with the processing of the information corresponding to the color components, one obtains the repetition histograms of color levels, from which statistical parameters are obtained, to be used in the process of comparison with the corresponding parameters of the standard model or models, for causing acceptance or rejection of the bank note being examined.

The method according to a second form of realization of the invention is characterized by the processing of spatial dependency matrices of the color levels, obtained from the processing of the color components, to obtain the parameters known as transitions and contrasts, to be used in the process of comparison with the corresponding parameters of the standard model or models for causing acceptance or rejection of the bank note being examined.

The method according to a third form of realization of the invention is characterized in that the processing of the information on the color components results in the conversion of said color components in red-green-blue format into tone-saturation-luminance format for calculating, in this format, the statistical parameters to be used in the process of comparing these with the corresponding parameters of the standard model or models for causing acceptance or rejection of the bank note being examined.

The invention also has, as an objective, an apparatus for the characterization and discrimination of legal tender bank notes and documents, in accordance with the methods indicated, which comprises carriage means for said notes or documents, devices for the illumination of said documents, sensors for measuring colors, and analogue as well as digital devices, for the conditioning and treatment of the signals obtained, characterized in that it includes a linear CCD color sensor which responds to the light reflected from the document, coming from a wide spectrum upper white light source, and to the light transmitted through the document, coming from a lower infrared light source, said sensor itself providing information corresponding to the color red, green and blue, and to the infrared light.

With this type of sensor a resolution is obtained of the image of the analysed surface much greater than that obtained with rows of photodiodes. For example, a CCD sensor with 520 pixels (photosensor units) is typical for each red, green and blue component, while rows of photodiodes are usually restricted to 32 units due to physical limitations since the physical space of each unit is much greater than the size of a pixel on the CCD.

Patent US 4922109 describes rows of narrow-spectrum photosensors which, for discriminating the colours red, green and blue, require a minimum of 3 modules of photosensor rows, while one CCD sensor by itself constitutes a single linear module.

Moreover, the use of a CCD sensor enormously simplifies the electronic circuitry inherent to a row of photodiodes (for example, the multiplexing and conversion at output by series register is integrated in the same CCD sensor), besides the incorporation of adjustments and subtlizers non-existent in rows of photodiodes, such as the presence of some blind pixels for adjusting the reference level for black or the terminals for connection of the integration time (for adjusting the sensitivity of the device to light) or the connection for the clock that marks the reading frequency of the information stored in the pixels.

In accordance with the invention light diffusers may also be fitted between any of the light sources and the document to be examined. The apparatus also advantageously includes an optical system for focusing on the document in the direction perpendicular to the direction of advance, with the aim of measuring the width of the document during its travel. The apparatus of the invention can also be provided with an optical system that focuses on one part of the document and allows the fineness of characteristic details of that document to be detected.

Finally, the apparatus is fitted with circuitry for digital processing, which includes a microprocessor, also incorporating peripheral circuits for carrying out control of the lighting systems, for control of the mechanical carriage system, and for communication with external devices and auxiliary sensors and signalling.

The optical sensorization method and the subsequent processing used for recognizing legal tender bank notes and documents forming the object of the invention are based on the inspection of the surface of those bank notes and documents in order to determine the content that they possess in the primary colour components and the subsequent processing of those colour components in order to obtain their characteristic parameters which will serve for comparison with standard parameters stored in memory and obtained from bank notes or documents regarded as calibration standards. As a result of the comparison the bank note subjected to inspection is accepted or rejected depending on whether it is regarded as genuine or not.

Inspection of the bank note is done over the entire surface or over a large part of it by means of analysing successive lines transverse to the note, from one end to the other as the bank note is displaced by the carriage mechanism.

Each line is analysed by a red, green and blue linear sensor, the luminous information on that line being shaped according to unitary triads of pixels (minute viewed areas) sensitive to the primary colour components.

The bank note is illuminated by means of broad-spectrum light (white light), both on the obverse side and on the reverse side as required by the printing of the note in such a way that the illumination captured by the linear sensor during some lines will be by transmission, and by reflection during the remainder.

The linear sensor is conditioned by means of precise electronic circuitry where, with the corresponding analog-digital converter, digitalized information is obtained relating to each pixel. This information is stored in a memory and goes to make up 3 tables (one for each colour component), each of them giving rise to a two-dimensional matrix where the number of columns is determined by the number of pixels of each line and the number of rows corresponds to the lines captured.

Each matrix is the result of data on each colour component coming from the linear sensor and the value of each element of that matrix represents the colour level detected in each pixel read.

The content of the matrix elements represents the distribution of colour levels in the surface analysed.

On the basis of this information a 1st order histogram is obtained, calculating for each colour level the number of pixels that contain that level.

The relation with a levels probability function is immediate:

b: represents each colour level.
N(b): Number of pixels showing level b.

$$P(b) = \frac{N(b)}{M}$$

M: Number of pixels read.
P(b): probability of level b occurring.

One way of characterizing a distribution is by means of statistical parameters.

The patent includes the use of some of the parameters that can be directly calculated starting from the probability function, in particular the following:

$$Mean = \bar{b} = \sum_{b=0}^{L-1} bP(b)$$

where L is the number of colour levels used.

$$Standard\ deviation = \left[\sum_{b=0}^{L-1} (b-\bar{b})^2 P(b)\right]^{\frac{1}{2}}$$

$$\text{Upper limit} = b_{max} - \bar{b};\ \text{with } b_{max}\ /\ \forall b > b_{max}\ P(b) = 0$$

$$\text{Lower limit} = \bar{b} - b_{min};\ \text{with } b_{min}\ /\ \forall b < b_{min}\ P(b) = 0$$

Points around the mean =

$$\sum_{\substack{|b-\bar{b}|<K}}^{M}$$

P(b) where K is a determined percentage of the total range.

$$\text{Total range} = b_{max} - b_{min}$$

$$Upper\ mean = \sum_{b=\bar{b}}^{b^{max}} bP(b)$$

$$\text{Lower mean} = \sum_{b=b_{min}}^{\bar{b}} bP(b)$$

As well as the statistical parameters described above, it is interesting to use relations among them in order to obtain parameters that are more stable with regard to variations due to aging, dirtiness, temperature, etc.

Another method for obtaining parameters having a greater stability against the variations mentioned above (aging, dirtiness, etc.) consists of using a spatial dependency matrix constructed on the basis of 2nd order histograms (one for each colour).

2nd order histograms are related to the distribution probability of transitions in level between pairs of pixels. The pairs of pixels that are considered can be contiguous or not, and can be spatially separated in any direction. Once the distance between the pixels that are going to be considered is defined, along with a direction of study, a second order histogram is calculated for each pair of colour levels a and b, and also for the number of times that a transition between these two levels appears N(a,b).

The probability of transitions between levels is given by:

$$P(a,b) = \frac{N(a,b)}{M}$$

where P(a,b) is the probability of a transition occurring between colour level a and that of b.

N(a,b) is the number of pixels in which that transition occurs.

M is the total number of points.

Having calculated this probability function for the desired directions and distances and for each primary colour, the spatial dependency matrix of colour levels can be constructed. This is an L $*$ L matrix (where L is the number of levels of each primary colour used) in which each element (a,b) represents the probability P(a,b) of a transition occurring between levels a and b. In this case, this matrix has been calculated for the horizontal and vertical directions, for adjacent pixels and for each primary colour.

Starting from the spatial dependency matrix, which contains a great deal of information on the level of details and contrasts present in the image, parameters corresponding to the following general model are calculated:

$$X = \sum_{a=0}^{L-1} \sum_{b=0}^{L-1} f(a,b) g[P(a,b)]$$

from which, depending on the weight that it is wished to give by way of variation of the transitions, the particular parameters can be personalized. This is how it has been used in fact.

Transitions: These are obtained as the sum of all the elements of the spatial dependency matrix for colour levels except diagonal elements. And it gives an idea of the number of level transitions present in the image as it travels in a particular direction.

$$\text{Transitions} = \sum_{a=0}^{L-1} \sum_{b=0}^{L-1} P(a,b) \text{ with } a \neq b$$

Contrast: This also takes transitions into account, but these are affected by a coefficient that gives greater weight when the difference between the levels involved in the transition is greater.

$$\text{Contrast} = \sum_{a=0}^{L-1} \sum_{b=0}^{L-1} (a-b)^2 P(a,b)$$

Homogeneity: This parameter gives greater value to zones in which there are fewer transitions.

$$Homogeneity = \sum_{a=0}^{L-1} \sum_{b=0}^{L-1} \frac{P(a,b)}{1 + |a-b|}$$

The parameters shown so far are focused on the global characteristics of the image in terms of the distribution of its colour levels. In order to carry out a complete study it seems evident that the spatial distribution of those colour levels needs to be evaluated. Putting this another way, parameters have been extracted that characterize the levels present and their transitions independently of the point of the image in which they are produced. What is missing is something that would detect the presence in the image of certain particular spatial shapes; it is not sufficient to detect certain levels and certain transitions, instead they must be detected in particular zones and in particular sequences, in other words, invariant zonal properties have to be located.

What needs to be determined is whether in a digitalized image f(x,y) of size $M * N$ any subimage is found similar to a standard or template W(x,y) of size $J * K$ with $J < M$ and $K < N$. One of the most common methods used for solving this problem is to carry out a correlation between W(x,y) and f(x,y).

In its simplest form the correlation between these two functions is given by:

$$R(m,n) = \sum_{x=0}^{J-1} \sum_{y=0}^{K-1} f(x+m,y+n)w(x,y)$$

$m = 0,1,.......(M-J) \qquad n = 0,1,.......(N-K)$

For each value of m and n the above equation is applied in such a way that R(m,n) is composed. For each value (m,n) the standard W(x,y) is superimposed on a different zone of the image f(x,y) and the level of coincidence in that position is determined by means of R(m,n).

The maximum value of R(m,n) will be given in the position in which there is the best match between the standard and the subimage of f(x,y).

As defined, the correlation function is none other than template matching between the standard that it is wished to detect and the image.

It is possible to modify the expression for the correlation in such a way that the peaks are accentuated somewhat more. This is achieved by means of a normalization of the following form:

$$R(m,n) = \frac{\displaystyle\sum_{X=0}^{J-1} \sum_{Y=0}^{K-1} f(x+m,y+n)w(x,y)}{\left[ \displaystyle\sum_{X=0}^{J-1} \sum_{Y=0}^{K-1} f^2(x+m,y+n) \right]^{\frac{1}{2}}}$$

All the characterization treatments stated above (parameters extractable from 1st and 2nd order histograms and template matching) are applied to the image of the surface of the bank note observed when illuminated from the side or transversely and captured line by line by the photosensor device for its later comparison with the corresponding representative lines from valid documents, with the aim of causing the acceptance or rejection of the document being examined.

These characterization treatments must not be understood as being restricted solely to the captured image as in the above explanation. They can also be extended to images obtained by other procedures such as in the case of a particular zone of interest (e.g. that in which details of the engraved printing are observed in which, because of its fineness, concentration of lines, etc., are poorly achieved with photocomposition systems for forgeries) which with suitable optical means are magnified in order to obtain the image forming the subject of analysis.

Another case of a particularized image could be that made up by Moiré fringes obtained with suitable interference means, since in the majority of bank notes there are zones where the printing of the inks creates a specific grating which, if observed via grating lenses similar to the above and located at an appropriate angle, give rise to interference fringes of frequency less than the above and known as Moiré fringes. (The detection of Moiré fringes is widely used in machine tools for capturing the positioning of height visualizers.)

The characteristics and advantages of the invention are revealed by the example shown in the diagrams of how this might be carried out, in which:

Figure 1 shows in diagrammatic form the arrangement of the apparatus forming the object of the invention.

Figure 2 is a block diagram of the means of conditioning and processing the signals supplied by the sensors.

Figure 3 is a diagram showing the spectral response of the illumination with particular LEDs with colours red and green (curves 1 and 4 in the continuous line), and also including the colours yellow and orange (2 and 3 in broken line).

Figure 4 is a diagram showing the spectral response of a colour CCD sensor device., in its respective red, green and blue tones.

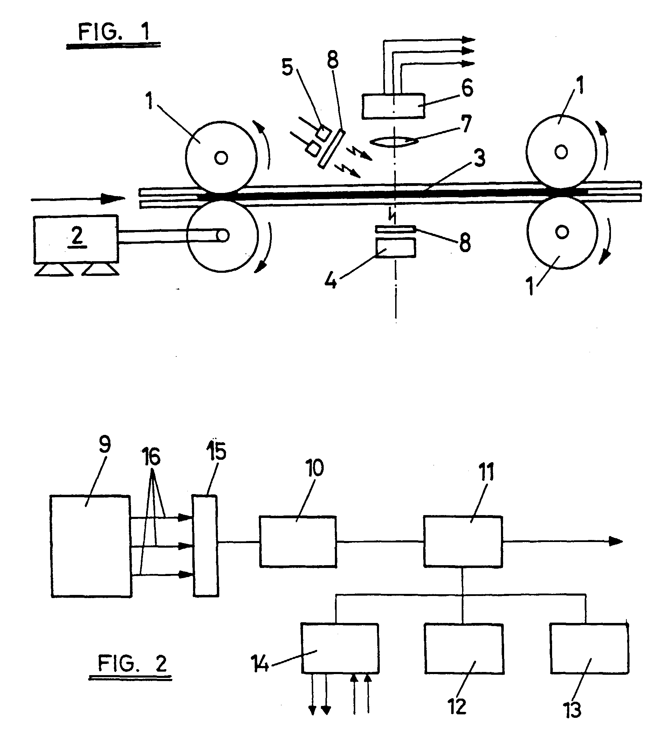

In the apparatus of the invention, figure 1, the entry of the bank note or document is detected by a detector not shown here, and a carriage mechanism is activated, which can consist of pairs of rollers 1 driven by a motor 2 and by means of which the bank note or document 3 succeeds in being displaced. At the same time the illumination systems 4 or 5 are activated, as required by the zones of the document 3. The apparatus includes a colour CCD linear sensor 6 at all times providing the colour component red-green-blue received from the document. The observation area will depend on the lens system 7 inserted between the sensor 6 and the document 3. In order to achieve greater uniformity in the illumination of the document, it is advisable to include diffusers 8 for the light emitters 4 and 5.

As can be appreciated in figure 2, the apparatus of the invention includes means 9 and 10 for conditioning the red-green-blue signals in analog terms and then digitalizing them, with the aim of being able to process them by means of a microprocessor 11, which includes RAM 12 and EPROM 13 memories and associated peripherals 12 via the peripherals input and output unit 14. The said means are provided with a switch 15 for selecting the colours red, green and blue, to each of which colour corresponds one of the paths 16. In a final phase, the result of the processing is compared with the representative values of valid bank notes in order to carry out acceptance or rejection of the bank note subjected to examination.

The peripheral circuits mentioned include input-output ports by both series and parallel path for carrying out control over the illumination systems, the mechanical carriage system for the sensors and auxiliary bodies, and for communication with external devices.

The light sources used will preferably consist of rows of small incandescent lamps or of halogen lamps or other broad-spectrum light sources such as fluorescent, neon or xenon lamps.

When the chromatic information present in the document to be examined is clearly concentrated in a limited part of the spectrum the use of broad-spectrum light sources or white light will not be important and selective monochromatic illumination can be used, such as rows of photodiodes each of the same colour or rows of photodiodes each of two or more different colours.

Similarly, and due to the frequent use in bank notes of inks that are fluorescent to ultraviolet illumination or inks visible in the infrared spectrum, the illumination described above can be complemented with ultraviolet or infrared light sources with the aim of obtaining fluorescent images or images visible under infrared so that they can later be analysed according to the characterization method contained in the patent.

CCD sensors in colours red, green and blue normally extend into the red field as far as the near infrared, therefore their use is feasible with the infrared illumination described above.

Bearing in mind that the CCD sensor device can cover the entire width of the bank note (depending on the focusing used) in the direction perpendicular to the direction of advance, a constant measurement is proceeded to be made of the width of the bank note for detecting possible cuts, folds or transverse dimension smaller than that tolerated, with which the document will be rejected.

Measurement of the length of the document being examined is also provided for, by means of the colour sensor in conjunction with the carriage system for that document, by the procedure of counting the lines inspected and contained in it and rejection of the document if the number of lines does not fall within the threshold established for authentic documents.

Taking into account the present cost of colour CCD sensors, a low-cost version of the apparatus described above could be produced, with an identical signal processing system, replacing the colour CCD linear sensor with a linear photosensor system in colours created on the basis of sets of photodiode triads, with each of the photodiodes in each triad being sensitive to the primary colour components (this sensitivity can be achieved by means of incorporating the corresponding optical filters into the photodiodes).

If the photodiodes sensitive to the colour red were also sensitive to the near infrared, and if it is wished to detect this spectral component (detection of infrared images), a photodiode sensor element for infrared can be incorporated in each photodiode sensor set (or it can replace the least sensitive photodiode).

Finally, a transformation can be used of the image according to its red, green and blue components into the format of tone, luminance and saturation, since in this latter format one has the tone component, which gives information that is more stable against variations in illumination (due to temperature, aging, dirtiness) than are the red, green and blue components. For this, in some cases it can be sufficient to exhaustively analyse the tone component as the object image of analysis instead of the images in red, green and blue. The transformation is carried out by calculating the following equations:

$$\text{Luminance: } L = \frac{1}{3}\,(R + G + B)$$

$$\text{Saturation: } S = 1 - \frac{3}{R + G + B}\,\min\,(R, G, B,)$$

$$\text{Tone: } T = \cos^{-1}\frac{\frac{1}{2}[R\text{-}G] + [R\text{-}B]}{[R\text{-}G]^2 + (R\text{-}B)\,(V\text{-}B)]^{\frac{1}{2}}}$$

The diagram of figure 3 shows along the ordinate the relative luminous intensity and along the abscissa the wavelength, the curves corresponding to the colours green, yellow, orange and red respectively emitted by typical photoemitters being referenced with the numbers 17, 18, 19 and 20.

In diagram 4 the relative response is measured along the ordinate and the wavelength along the abscissa, the curves corresponding to the colours blue, green and red, the typical response of a colour CCD, being represented respectively by the references 21, 22 and 23.

## Claims

1. Method for the characterization and discrimination of legal tender bank notes and documents, consisting of the carriage of the document to be analysed along a path in which that document is illuminated and its colour analysed by means of at least one red-green-blue colour sensor, which provides information on the colour components of the light received from the document subjected to examination, with the aim of extracting the colorimetric characteristics of the document, from which are obtained statistical parameters to be compared with representative standards for valid documents with the aim of deciding on the acceptance or rejection of the document subjected to examination, characterized in that, with the processing of the information corresponding to the color components, one obtains the repetition histograms of color levels, from which statistical parameters are obtained, to be used in the process of comparison with the corresponding parameters of the standard model or models, for causing acceptance or rejection of the bank note being examined.

2. Method for the characterization and discrimination of legal tender bank notes and documents, consisting of the carriage of the document to be analysed along a path in which that document is illuminated and its colour analysed by means of at least one red-green-blue colour sensor, which provides information on the colour components of the light received from the document subjected to examination, with the aim of extracting the colorimetric characteristics of the document, from which are obtained statistical parameters to be compared with representative standards for valid documents with the aim of deciding on the acceptance or rejection of the document subjected to examination, characterized by the processing of spatial dependency matrices of the color levels, obtained from the processing of the color components, to obtain the parameters known as transitions and contrasts, to be used in the process of comparison with the corresponding parameters of the standard model or models for causing acceptance or rejection of the bank note being examined.

3. Method for the characterization and discrimination of legal tender bank notes and documents, consisting of the carriage of the document to be analysed along a path in which that document is illuminated and its colour analysed by means of at least one red-green-blue colour sensor, which provides information on the colour components of the light received from the document subjected to examination, with the aim of extracting the colorimetric characteristics of the document, from which are obtained statistical parameters to be compared with representative standards for valid documents with the aim of deciding on the acceptance or rejection of the document subjected to examination, characterized in that the processing of the information on the color components results in the conversion of said color components in red-green-blue format into tone-saturation-luminance format for calculating, in this format, the statistical parameters to be used in the process of comparing these with the corresponding parameters of the standard model or models for causing acceptance or rejection of the bank note being examined.

4. Apparatus for the characterization and discrimination of legal tender bank notes and documents, according to claims 1 to 3, which comprises carriage means (1) for said notes or documents (3), devices for the illumination of said documents, sensors for measuring colors, and analogue as well as digital devices, for the conditioning and treatment of the signals obtained, characterized in that it includes a linear CCD color sensor (6) which responds to the light reflected from the document (3), coming from a wide spectrum upper white light source (5), and to the light transmitted through the document, coming from a lower infrared light source (4), said sensor (6) itself providing information corresponding to the color red, green and blue, and to the infrared light.

**Patentansprüche**

1. Verfahren zur Prüfung von Eigenschaften und zur Unterscheidung von Banknoten eines gesetzlichen Zahlungsmittels und von Urkunden, umfassend den Schlitten der Urkunde, die längs eines Weges analysiert werden soll, in welchem das Dokument beleuchtet wird und seine Farbe mit Hilfe zumindest eines rot-grün-blau-Farbsensors analysiert wird, der Informationen über die Farbkomponenten des Lichts beschafft, das von dem der Untersuchung unterzogenen Urkunde empfangen wird, mit dem Ziel, die farbmetrischen Eigenschaften der Urkunde abzuleiten, woraus statistische Kennwerte erhalten werden, die mit repräsentativen Standards für gültige Urkunden mit dem Ziel der Entscheidung, ob die der Untersuchung unterzogene Urkunde angenommen oder zurückgewiesen wird, verglichen wird, dadurch gekennzeichnet, daß mit der Verarbeitung der Informationen, die den Farbkomponenten entsprechen, die Wiederholungshistogramme der Farbstufen erhalten werden, aus denen statistische Kennwerte erhalten werden, zur Verwendung in dem Vergleichsvorgang mit den entsprechenden Kennwerten des Standardmodells oder der -modelle, um das Annehmen oder Zurückweisen der untersuchten Banknote zu veranlassen.

2. Verfahren zur Prüfung von Eigenschaften und zur Unterscheidung von Banknoten eines gesetzlichen Zahlungsmittels und von Urkunden, umfassend den Schlitten der Urkunde, die längs eines Weges analysiert werden soll, in welchem das Dokument beleuchtet wird und seine Farbe mit Hilfe zumindest eines rot-grün-blau-Farbsensors analysiert wird, der Informationen über die Farbkomponenten des Lichts beschafft, das von dem der Untersuchung unterzogenen Urkunde empfangen wird, mit dem Ziel, die farbmetrischen Eigenschaften der Urkunde abzuleiten, woraus statistische Kennwerte erhalten werden, die mit repräsentativen Standards für gültige Urkunden mit dem Ziel der Entscheidung, ob die der Untersuchung unterzogene Urkunde angenommen oder zurückgewiesen wird, verglichen wird, gekennzeichnet durch das Verarbeiten von räumlich abhängigen Farbabstufungsmatritzen, die aus der Verarbeitung der Farbkomponenten erhalten werden, um die Kennwerte, die als Übergänge und Kontraste bekannt sind, zu erhalten, zur Verwendung in dem Vergleichsvorgang mit den entsprechenden Kennwerten des Standardmodells oder der -modelle, um das Annehmen oder Zurückweisen der untersuchten Banknote zu veranlassen.

3. Verfahren zur Prüfung von Eigenschaften und zur Unterscheidung von Banknoten eines gesetzlichen Zahlungsmittels und von Urkunden, umfassend den Schlitten der Urkunde, die längs eines Weges analysiert werden soll, in welchem das Dokument beleuchtet wird und seine Farbe mit Hilfe zumindest eines rot-grün-blau-Farbsensors analysiert wird, der Informationen über die Farbkomponenten des Lichts beschafft, das von dem der Untersuchung unterzogenen Urkunde empfangen wird, mit dem Ziel, die farbmetrischen Eigenschaften der Urkunde abzuleiten, woraus statistische Kennwerte erhalten werden, die mit repräsentativen Standards für gültige Urkunden mit dem Ziel der Entscheidung, ob die der Untersuchung unterzogene Urkunde angenommen oder zurückgewiesen wird, verglichen wird, dadurch gekennzeichnet, daß die Verarbeitung der Informationen der Farbkomponenten als Ergebnis die Umwandlung der Farbkomponenten vom rot-grün-blau-Format in das Ton-Sättigung-Luminanz-Format liefert zur Berechnung der statistischen Kennwerte in diesem Format, zu ihrer Verwendung in dem Vergleichsvorgang mit den entsprechenden Kennwerten des Standardmodells oder der -modelle, um das Annehmen oder Zurückweisen der untersuchten Banknote zu veranlassen.

4. Vorrichtung zur Prüfung von Eigenschaften und zur Unterscheidung von Banknoten eines gesetzlichen Zahlungsmittels und von Urkunden nach Anspruch 1 bis 3, die ein Schlittenmittel (1) für die Scheine oder Urkunden (3), Geräte für die Beleuchtung der Urkunden, Sensoren zur Farbmessung und sowohl Analog- als auch Digitalgeräte umfaßt, zur Aufbereitung und Behandlung der erhaltenen Signale, dadurch gekennzeichnet, daß sie einen linearen CCD-Farbsensor (6) beinhaltet, der auf das von der Urkunde (3) reflektierte Licht, das von einer oberen weißen Lichtquelle (5) mit einem breiten Spektrum stammt, und auf das durch die Urkunde durchgegangene Licht, das von einer tieferen Infrarotlichtquelle (4) stammt, anspricht, wobei der Sensor (6) selbst Informationen beschafft, die den Farben Rot, Grün und Blau und dem infraroten Licht zuzuordnen sind.

## Revendications

1. Procédé de caractérisation et de discrimination de titres de paiement sous forme de billets de banque et autres documents, consistant à transporter le document à analyser le long d'un trajet au cours duquel le document est éclairé et sa couleur analysée au moyen d'au moins un capteur de rouge/vert/bleu qui fournit des informations concernant les composantes de couleur de la lumière reçue du document soumis à l'examen, dans le but d'extraire les caractéristiques colorimétriques du document, d'où l'on obtient des paramètres statistiques à comparer avec des normes représentatives de documents en vigueur, en vue de décider si le document soumis à l'examen doit être accepté ou rejeté,
caractérisé en ce que, au moyen du traitement des informations correspondant aux composantes de couleur, l'on obtient les histogrammes de répétition de niveaux de couleurs d'où l'on obtient des paramètres statistiques à utiliser dans le processus de comparaison aux paramètres correspondants du ou des modèles(s) standard(s), pour arriver soit à l'acceptation, soit au rejet du billet de banque examiné.

2. Procédé pour la caractérisation et la discrimination de titres de paiement sous forme de billets de banque et autres documents, consistant à transporter le document à analyser le long d'un trajet au cours duquel le document est éclairé et sa couleur analysée au moyen d'au moins un capteur de rouge/vert/bleu qui fournit des informations concernant les composantes de couleur de la lumière reçue du document soumis à l'examen, dans le but d'extraire les caractéristiques colorimétriques du document, d'où l'on obtient des paramètres statistiques à comparer à des normes représentatives de documents en vigueur, en vue de décider si le document soumis à l'examen doit être accepté ou rejeté,
caractérisé par le traitement de matrices spatiales de dépendance des niveaux de couleurs, obtenues à partir du traitement des composantes de couleurs, en vue d'obtenir les paramètres connus en tant que transitions et contrastes, à utilser dans le processus de comparaison aux paramètres correspondants du ou des modèle(s) standard (s) pour arriver soit à l'acceptation, soit au rejet du billet de banque examiné.

3. Procédé de caractérisation et de discrimination de titres de paiement sous forme de billets de banque et autres documents, consistant à transporter le document à analyser le long d'un trajet au cours duquel le document est éclairé et sa couleur analysée au moyen d'au moins un capteur de rouge/vert/bleu qui fournit des informations concernant les composantes de couleur de la lumière reçue du document soumis à l'examen, dans le but d'extraire les caractéristiques colorimétriques du document, d'où l'on obtient des paramètres statistiques à comparer avec des normes représentatives de documents en vigueur, en vue de décider si le document soumis à l'examen doit être accepté ou rejeté.
caractérisé en ce que le traitement des informations sur les composantes de couleurs entraîne la conversion desdites composantes de couleurs de format rouge/vert/bleu en un format ton-saturation-luminance pour calculer dans ce format les paramètres statistiques à utiliser dans le processus de leur comparaison aux paramètres correspondants du ou des modèle(s) standard(s) pour arriver soit à l'acceptation, soit au rejet du billet de banque examiné.

4. Appareil pour la caractérisation et la discrimination de titres de paiement sous forme de billets de banque et autres documents selon les revendications 1 à 3, comprenant des moyens (1) de transport des bilets de banque ou autres documents (3), des moyens d'éclairage desdits documents, des capteurs pour mesurer des couleurs, et des moyens analogiques aussi bien que numériques pour conditionner et traiter les signaux obtenus,
caractérisé en ce qu'il comprend un capteur de couleurs à transfert de charges linéaire (6) qui réagit à la lumière réfléchie du document (3) et provenant d'une source supérieure (5) de lumière blanche à large spectre, et à la lumière émise à travers le document et provenant d'une source inférieure (4) de lumière infrarouge, ledit capteur (6) fournissant quant lui des informations correspondant à la couleur rouge, vert et bleu, et à la lumière infrarouge.

## FIG. 1

## FIG. 2

FIG. 3

SPECTRAL RESPONSE

FIG. 4

WAVELENGTH $\lambda$ (NM)

EP 0 660 277 B1